Europäisches Patentamt

European Patent Office

Office européen des brevets

(11) Veröffentlichungsnummer : **0 026 814**
**B1**

(12) **EUROPÄISCHE PATENTSCHRIFT**

(45) Veröffentlichungstag der Patentschrift : 24.08.83

(51) Int. Cl.³ : **C 07 F 9/50**, B 01 J 31/24

(21) Anmeldenummer : 80104158.3

(22) Anmeldetag : 16.07.80

(54) **Verfahren zur Herstellung eines Isomerengemisches sekundärer Phosphine sowie die Verwendung dieses Gemisches.**

(30) Priorität : 29.09.79 DE 2939588

(43) Veröffentlichungstag der Anmeldung : 15.04.81 Patentblatt 81/15

(45) Bekanntmachung des Hinweises auf die Patenterteilung : 24.08.83 Patentblatt 83/34

(84) Benannte Vertragsstaaten :
**BE CH DE FR GB IT LI NL**

(56) Entgegenhaltungen :
DE A 2 703 802
US A 2 957 931

(73) Patentinhaber : **HOECHST AKTIENGESELLSCHAFT**
**Postfach 80 03 20**
**D-6230 Frankfurt am Main 80 (DE)**

(72) Erfinder : **Elsner, Georg, Dr.**
**Dr. Krauss-Strasse 5**
**D-5030 Hürth (DE)**
Erfinder : **Vollmer, Hartfrid, Dr.**
**Berliner Strasse 1**
**D-5042 Erftstadt (DE)**
Erfinder : **Heymer, Gero, Dr.**
**Fasanenaue 12**
**D-5042 Erftstadt (DE)**

Verfahren zur Herstellung eines Isomerengemisches sekundärer Phosphine sowie die Verwendung dieses Gemisches

Die vorliegende Erfindung betrifft ein Verfahren zur Herstellung eines Isomerengemisches sekundärer Phosphine sowie die Verwendung dieses Gemisches.

In der US-A 2,957,931 sind in allgemeiner Form Herstellungsweisen von organischen Phosphorverbindungen beschrieben, welche dadurch charakterisiert sind, daß in ihnen mindestens ein organisches Radikal durch eine direkte Kohlenstoff-Phosphor-Bindung mit dem Phosphor verbunden ist.

Verbindungen solcher Art werden erhalten, indem man Phosphorverbindungen, die über mindestens eine Phosphor-Wasserstoff-Bindung verfügen, bei Temperaturen zwischen 20 und 300 °C mit organischen Verbindungen umsetzt, die mindestens eine Kohlenstoff-Kohlenstoff-Doppelbindung aufweisen.

Als für eine Umsetzung geeignete Verbindungen sind in der US-A 2,957,931 u. a. auch Phosphorwasserstoff ($PH_3$) und Dicyclopentadien (nachfolgend kurz als DCP bezeichnet) erwähnt. Ferner ist in dieser Druckschrift angeführt, daß freie Radikale bildende Mittel die Umsetzung zwischen dem Phosphor und den ungesättigten organischen Verbindungen begünstigen, was auch aus Journal of Organic Chemistry, Bd. 26, (1961), Seiten 5138-45 bekannt ist.

Nachteilig an dem bekannten Verfahren gemäß US-A 2,957,931 ist, daß die Umsetzung nur mit geringen Ausbeuten und bei einem Überschuß an Olefin unter Bildung tertiärer Phosphine verläuft (vgl. Beispiele 68 und 69).

In der DE-A-2.703.802 wird ein Verfahren zur Herstellung von primären und sekundären Phosphinen durch Umsetzung von Phosphorwasserstoff mit einem Cycloalkylen in Gegenwart eines Katalysators und bei hohem Druck beschrieben. Die sekundären Phosphine werden nur dann erhalten, wenn man die Olefine mit einem stöchiometrischen Überschuß an $PH_3$ umsetzt.

Überraschenderweise wurde nun gefunden, daß man in praktisch quantitativer Ausbeute aus $PH_3$ und DCP im Molverhältnis 1 : mindestens 2 ein Isomerengemisch sekundärer Phosphine erhält, wenn man die Umsetzung unter einem Druck von 5 bis 90 bar, vorzugsweise von 15 bis 30 bar, durchführt.

Es zeigte sich, daß bei Einsatz stöchiometrischer Mengen, d. h. $PH_3$ : DCP im Molverhältnis 1 : 2, quantitativ sekundäre Phosphine entstehen. Die Bildungstendenz dieser sekundären Phosphine ist so groß, daß selbst bei Vorhandensein eines großen Phosphorwasserstoff-Überschusses ($PH_3$ : DCP wie 5 : 1) stets beträchtliche Mengen sekundärer Phosphine entstehen (neben primärem Phosphin).

Hingegen entsteht selbst bei hohem Olefinüberschuß kein tertiäres Phosphin. Überraschend ist weiterhin die kurze Reaktionszeit von knapp zwei Stunden für einen ca. 190 molaren Ansatz.

Vorzugsweise setzt man jedoch $PH_3$ und DCP im Molverhältnis 1 : 2 um. Gegebenenfalls destilliert man das Umsetzungsprodukt und fängt die bei 155-157 °C und 0,05 mbar übergehende Fraktion auf.

Die bevorzugte Bildung sekundärer Phosphine unter den erfindungsgemäßen Bedingungen war für einen Fachmann nicht vorhersehbar, da in der Fachwelt das Vorurteil bestand, zunehmender Druck würde die Bildung primärer Phosphine begünstigen.

DCP läßt bei der Umsetzung mit $PH_3$ die Bildung mehrerer Isomere zu. Die genaue Konstitution des Umsetzungsproduktes ist bislang noch nicht aufgeklärt worden.

Als freie Radikale bildende Mittel können erfindungsgemäß solche eingesetzt werden, von denen bekannt ist, daß sie die Umsetzung von $PH_3$ mit Olefinen katalysieren und die z. B. in den oben genannten Druckschriften erwähnt sind.

Beispielsweise eignet sich hierzu Azobisisobutyronitril (nachfolgend kurz als ABIN bezeichnet), oder Di-t-butylperoxid, wobei diese Stoffe vorzugsweise in Form ihrer Lösungen in inerten organischen Lösungsmitteln eingesetzt werden.

Das Isomerengemisch der neuen sekundären Phosphine ist beispielsweise als Zwischenprodukt zur Herstellung von Flotationshilfsmitteln oder als modifizierender Bestandteil von Übergangsmetallkomplexen mit katalytischer Aktivität geeignet.

Die Erfindung soll durch die nachfolgenden Beispiele illustriert werden.

Beispiel 1

In einem 80 l Autoklaven mit Rührer, diversen Einleitrohren und Doppelmantel werden 30 kg DCP eingefüllt. Sodann wird auf − 10 °C abgekühlt, evakuiert und 2,57 kg $PH_3$ einkondensiert, so daß sich ein Molverhältnis DCP zu $PH_3$ wie 3 : 1 ergibt. Diese Mischung wird auf 90 °C erwärmt. Sodann werden mit Hilfe einer Dosierpumpe 3 Liter einer gesättigten Lösung von ABIN in Toluol im Verlaufe von 2 Stunden eingepumpt. Die stark exotherme Reaktion ist dann am Ende. Es wird eine Probe entnommen und [31]P-Kernresonanz spektroskopisch untersucht. Es wird nur ein breites Signal bei + 34 ppm mit Multiplettstruktur gefunden, das von der Lage her nur von einem Gemisch sekundärer Phosphine herrühren kann. Primäres oder tertiäres Phosphin kann nicht nachgewiesen werden. Nach der Abdestillation von Toluol und DCP verbleibt ein zähes gelbliches Öl mit einem Phosphorgehalt von 10.1 Gew.-% (ber. auf sek. Phosphin : 10.4 Gew.-%).

Die Umsetzung wurde unter einem Druck von 17,5 bar durchgeführt. Gegen Ende der Reaktion fiel der Druck auf etwa 5 bar ab.

**Beispiel 2**

Gemäß der Arbeitsweise von Beispiel 1 werden 40 kg DCP und 5,3 kg $PH_3$ miteinander umgesetzt. Dies entspricht einem Umsatz von $DCP : PH_3$ im Molverhältnis von etwa 2 : 1. Die Reaktion ist nach zwei Stunden beendet. Nach Abziehen der Leichtsieder verbleibt in nahezu quantitativer Ausbeute ein sehr zähes gelbliches Öl mit einem Phosphorgehalt von 10.3. Die Umsetzung wurde unter einem Druck von 22 bar durchgeführt, wobei der Druck bei Beendigung der Reaktion auf etwa 3 bar abgefallen ist.

**Ansprüche**

1. Verfahren zur Herstellung eines Isomerengemisches sekundärer Phosphine der Summenformel $C_{20}H_{27}P$ durch Umsetzung von Phosphorwasserstoff mit Dicyclopentadien in Gegenwart eines freie Radikale bildenten Mittels, dadurch gekennzeichnet, daß man den Phosphorwasserstoff und das Dicyclopentadien im Molverhältnis 1 : mindestens 2 und unter einem Druck von 5 bis 90 bar umsetzt.

2. Verfahren nach Anspruch 1, dadurch gekennzeichnet, daß man Phosphorwasserstoff und Dicyclopentadien im Molverhältnis 1 : 2 umsetzt.

3. Verfahren nach Anspruch 1 oder 2, dadurch gekennzeichnet, daß man die Umsetzung unter einem Druck von 15-30 bar durchführt.

4. Verfahren nach einem der Ansprüche 1 bis 3, dadurch gekennzeichnet, daß man das Umsetzungsprodukt destilliert und die bei 155-157 °C und 0,05 mbar übergehende Fraktion auffängt.

5. Verwendung des Isomerengemisches sekundärer Phosphine nach Anspruch 1 als Zwischenprodukt für Flotationshilfsmittel sowie als Bestandteil von Übergangsmetallkomplexen mit katalytischer Aktivität.

**Claims**

1. Process for making a mixture of isomeric secondary phosphines with the summation formula $C_{20}H_{27}P$ by reacting hydrogen phosphide with dicyclopentadiene in the presence of an agent yielding free radicals, which comprises : reacting the hydrogen phosphide and dicyclopentadiene in a molar ratio of 1 to at least 2 and under a pressure of 5 to 90 bars.

2. Process as claimed in claim 1, wherein hydrogen phosphide and dicyclopentadiene are reacted in a molar ratio of 1 : 2.

3. Process as claimed in claim 1 or 2, wherein the reaction is effected under a pressure of 15 to 30 bars.

4. Process as claimed in any of claims 1 to 3, wherein the reaction product is distilled and the fraction distilling over at 155 to 157 °C under a pressure of 0.05 millibar is collected.

5. Use of the mixture of isomeric secondary phosphines as claimed in claim 1 as intermediary product for flotation aids and as constituent of catalytically active transition metal complexes.

**Revendications**

1. Procédé de préparation d'un mélange de phosphines secondaires isomères de formule brute $C_{20}H_{27}P$ par réaction d'hydrogène phosphoré avec le dicyclopentadiène en présence d'un agent générateur de radicaux libres, caractérisé en ce que l'on fait réagir l'hydrogène phosphoré et le dicyclopentadiène dans un rapport molaire de 1 : 2 au minimum sous une pression de 5 à 90 bars.

2. Procédé selon la revendication 1, caractérisé en ce que l'on fait réagir l'hydrogène phosphoré et le dicyclopentadiène dans un rapport molaire de 1 : 2.

3. Procédé selon la revendication 1 ou 2, caractérisé en ce que l'on effectue la réaction sous une pression de 15-30 bars.

4. Procédé selon l'une des revendications 1 à 3, caractérisé en ce que l'on distille le produit de réaction et on recueille la fraction passant à 155-157 °C sous une pression de 0,05 millibar.

5. Utilisation du mélange de phosphines secondaires isomères selon la revendication 1 comme produit intermédiaire pour auxiliaires de flottation ainsi que comme constituant de complexes de métaux de transition à activité catalytique.